# EUROPÄISCHE PATENTSCHRIFT

(11) **EP 1 582 275 B1**
(45) Veröffentlichungstag und Bekanntmachung des Hinweises auf die Patenterteilung: **02.05.2007**
(21) Anmeldenummer: 05006833.7
(22) Anmeldetag: 30.03.2005
(51) Int. Cl.: B21D 53/10, F16C 33/14, B23P 15/00

(54) **Gerollte Gleitlagerbundbuchse sowie Verfahren zur Herstellung derselben**
Wrapped collared bearing bush and method of manufacturing thereof
Palier de coussinet enroulé avec un collet et son procédé de fabrication

(30) Priorität: 01.04.2004 DE 102004015977
(43) Veröffentlichungstag der Anmeldung: 05.10.2005
(73) Patentinhaber: KS Gleitlager GmbH, 68784 St. Leon-Rot (DE)
(72) Erfinder: Bickle, Wolfgang, 68799 Reilingen (DE); Schubert, Werner, 69168 Wiesloch (DE)
(74) Vertreter: Friz, Oliver

(56) Entgegenhaltungen:
- DE-A1- 2 049 184
- DE-A1- 2 406 361
- DE-A1- 3 908 026
- DE-C2- 10 107 109

## Beschreibung

Die Erfindung betrifft eine gerollte Gleitlagerbundbuchse mit einer Stoßfuge, mit einem zylindrischen Teil, mit einer Längsachse und an wenigstens einer Stirnseite mit einem nach radial außen flanschartig erstreckten Bund, gemäß dem Oberbegriff des Anspruchs 1, sowie ein Verfahren zum Herstellen eine solchen Gleitlagerbundbuchse, gemäß dem Oberbegriff des Anspruchs 5.

Solche Gleitlagerbundbuchsen sind umfangreich bekannt geworden. Im Unterschied zu gerollten bundlosen Gleitlagerbuchsen besteht das Problem des Geschlossenhaltens der Stoßfuge. Durch Umlegen des den Bund bildenden Randabschnitts nach radial außen kommt es nämlich in besonderem Maße am radial äußeren Rand des Bunds zu in Umfangsrichtung wirkenden Zugspannungen, welche ein die gerollte Buchse öffnendes Moment erzeugen. Um diese Spannungen zu reduzieren, wurde mit DE 101 07 109 C2 bereits vorgeschlagen, an mehreren, in Umfangsrichtung über den Bund verteilten Stellen materialverdrängende Vertiefungen in Form von Prägungen in dem Material des Bunds vorzusehen. Durch die hierdurch erzeugte Materialverdrängung könne die Stoßfuge geschlossen gehalten werden. Hierdurch ergeben sich aber Unregelmäßigkeiten in der Oberfläche des Bunds, die sich störend erweisen. Je nach Material der Gleitlagerbundbuchse können diese Prägungen zur Beeinträchtigung oder lokalen Zerstörung des Werkstoffs führen. Insbesondere können Bereiche einer Gleitbeschichtung abplatzen und die Buchse dadurch unbrauchbar machen.

Der vorliegenden Erfindung liegt die Aufgabe zugrunde, das Auftreten von störenden Spannungen im Bundbereich einer Gleitlagerbundbuchse zu verhindern, wobei aber keine Vertiefungen und damit Unterbrechungen im Bereich der Oberfläche des Bunds erzeugt werden sollen.

Diese Aufgabe wird bei einer gerollten Gleitlagerbundbuchse der genannten Art erfindungsgemäß dadurch gelöst, dass zur Reduzierung von in Umfangsrichtung des Bunds wirkenden Zugspannungen am Außen- und/oder Innenrand des Bunds in Umfangsrichtung durchgehend eine Fase geprägt ist.

Es wird also nach dem Rollen eines ursprünglich ebenen Platinenabschnitts auf Buchsenform und vorzugsweise unmittelbar nach dem Umlegen des den Bund bildenden Randabschnitts am Außen- und/oder am Innenrand eine Fase gedrückt oder geprägt. Dies führt dazu, dass im Bereich des Bunds eine Materialverdrängung durchgeführt wird, die über die Umfangsrichtung gleichmäßig erfolgt. Hierdurch werden Zugspannungen im Bereich des Bunds wirksam reduziert, ohne dass eine in Umfangsrichtung variierende Bunddicke hingenommen werden muss und ohne dass Material unkontrolliert nach radial außen fließt, was im Hinblick auf die Beibehaltung eines kreisförmigen Außenumfangs des Bunds problematisch ist.

Die Erfindung erweist sich als besonders vorteilhaft bei Gleitlagerbundbuchsen, die aus einem Metall/Kunststoffverbundwerkstoff hergestellt sind. Insbesondere kann die Kunststoffkomponente auf Polymerbasis beruhen, sie kann PTFE als Polymerbasis umfassen, insbesondere wenigstens 60 Vol.-%, vorzugsweise wenigstens 70 Vol.-% PTFE umfassen. Die Kunststoffkomponente kann dabei in eine poröse, insbesondere auf eine metallische Stützschichz aufgesinterte Trägerschicht einimprägniert sein. Bei derartigen Metall/Kunststoff-Verbundwerkstoffen erweist sich nämlich das Anbringen von in Umfangsrichtung verteilt angeordneten Prägungen der Außenfläche und/oder der Innenfläche des Bunds als besonders problematisch. Dabei kommt es zu unkontrollierten Verdrängungen der Kunststoffkomponente. Eine gegebenenfalls vorgesehene poröse Trägerschicht kann dabei ebenfalls zerstört werden. Im Ergebnis kann es zu Ablöseerscheinungen der Kunststoffgleitschicht kommen. Bei der erfindungsgemäßen Gleitlagerbundbuchse treten diese Probleme aber nicht auf. Dadurch, dass nicht an mehreren Stellen Bereiche des Bunds von der Außenfläche oder Innenfläche des Bunds her verprägt werden, sondern indem erfindungsgemäß ein Außenrand und/oder ein Innenrand in Umfangsrichtung durchgehend angefast wird, indem dort durch Prägen bzw. Drücken eine Materialverformung durchgeführt wird, können die in Umfangsrichtung wirkenden Zugspannungen, die sich durch das Umlegen des Bunds ergeben, sehr wirksam reduziert werden, und zwar ohne dass es zu den vorstehend geschilderten nachteiligen Auswirkungen kommt. Insbesondere weist der Bund eine unterbrechungsfreie gleichmäßige glatte äußere und innere Oberfläche auf, was als besonders vorteilhaft anzusehen ist.

Des Weiteren betrifft die Erfindung ein Verfahren mit den Merkmalen des Anspruchs 5.

Weitere Merkmale, Einzelheiten und Vorteile der Erfindung ergeben sich aus den beigefügten Patentansprüchen und aus der zeichnerischen Darstellung und nachfolgenden Beschreibung einer bevorzugten Gleitlagerbundbuchse nach der Erfindung.

In der Zeichnung zeigt:
- Figur 1: Figur 1 eine Bundbuchsenvorbiegestation;
- Figur 2: eine Bundbuchsenfertigbiegestation;

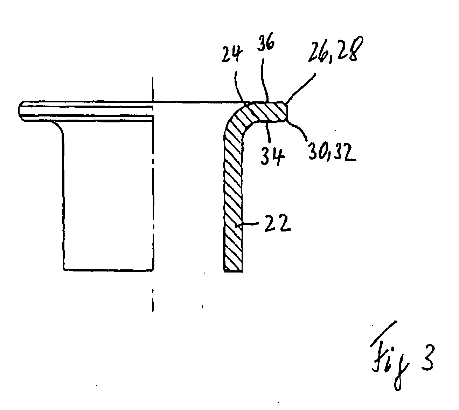

- Figur 3: eine Schnittansicht durch eine fertig gebogene Bundbuchse und
- Figur 4: eine vergrößerte und schematische Schnittdarstellung eines Bundbereichs mit angedeuteten zu prägenden Fasen.

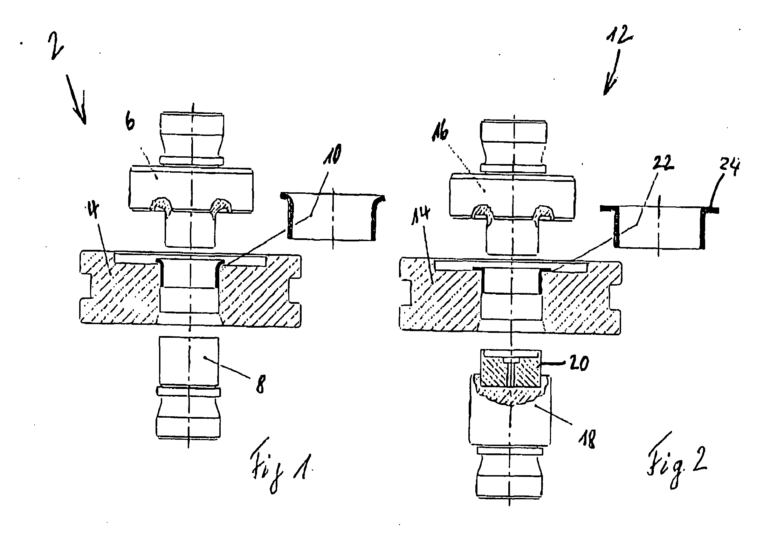

Figur 1 zeigt eine Bundbuchsenvorbiegestation 2, mit einer Matrize 4, einem Vorbiegedorn 6 und einem Einstoßer 8. Ferner dargestellt ist eine gerollte Buchse 10 im vorgebogenen Zustand, wie sie aus der Vorbiegestation hervorgeht.

Figur 2 zeigt dann eine Fertigbiegestation 12 mit einer Matrize 14, einem Fertigbiegedorn 16 und einem Gegenhalter 18 mit einem Presseinsatz 20. Die fertig gebogene Bundbuchse ist mit Bezugszeichen 22 bezeichnet.

Nach diesem Herstellungsvorgang ist das Material im Bundbereich einer extremen Längung unterzogen. Es wirken sehr starke Zugspannungen im radial äußeren Bereich des Bunds 24 der Bundbuchse 22. Diese in Umfangsrichtung wirkenden Zugspannungen im Bund erzeugen ein die gerollte Buchse öffnendes Moment.

Es wurde erfindungsgemäß festgestellt, dass sich diese Zugspannungen erfindungsgemäß reduzieren lassen, wenn in dem radial äußeren Bereich des Bunds 24 in Umfangsrichtung durchgehend eine Fase geprägt wird. Es kann hierfür eine Fase 26 an einem Außenrand 28 des Bunds 24 und/oder eine Fase 30 an einem Innenrand 32 geprägt werden. Der Innenrand 32 ist der Rand derjenigen Bundfläche 34, die gegen eine die Lagergehäuseöffnung für die Bundbuchse 22 umgebende Fläche des Lagergehäuseteils anliegt. Der Außenrand 28 begrenzt demgemäß die gegenüberliegende Bundfläche 36, die im eingepressten Zustand der Bundbuchse 22 in eine Lagergehäuseöffnung die Sichtfläche bildet.

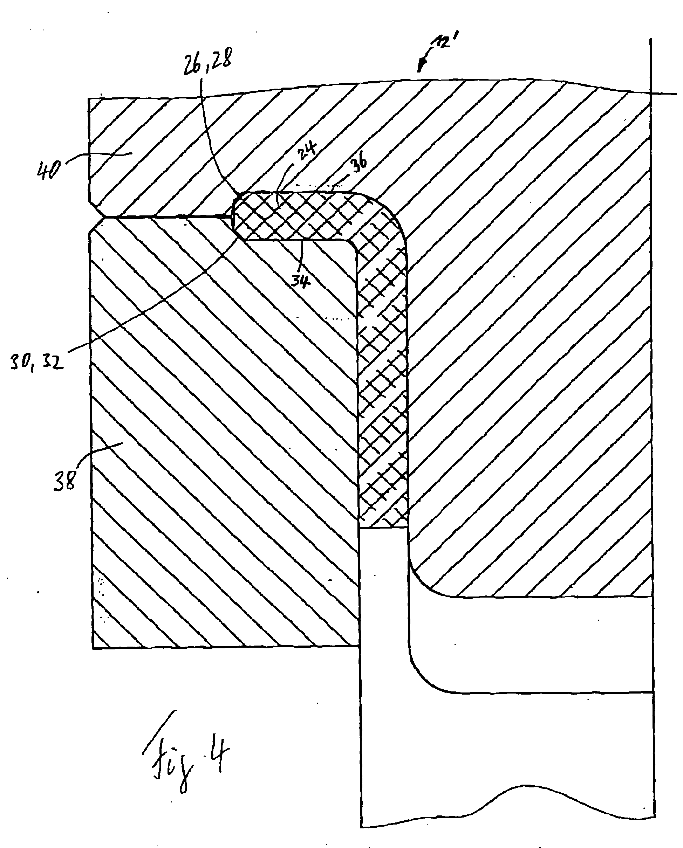

Figur 4 zeigt schematisch die Ausbildung einer Fertigbiegestation 12', mittels derer in Umfangsrichtung durchgehend am Außenrand 28 und am Innenrand 32 eine Fase 26, 30 bei der Bundbuchse 22 geprägt werden kann, und zwar unmittelbar beim Fertigbiegen bzw. Umlegen des Bunds 24. Eine dem Bund 24 zugewandte Innenkontur einer Matrize 38 und eines Fertigbiegedorns 40 ist komplementär zur herzustellenden Kontur des Bunds 24 ausgebildet. Wahrend die Fasen 26, 30 am Außenrand 28 bzw. am Innenrand 32 geprägt werden, wird ein Fließen des Materials nach radial außen durch die Formgebung von Matrize 38 und Fertigbiegedorn 40 verhindert, indem diese von radial außen gegen den Bund gegenhalten. Auf diese Weise werden die Zugspannungen im radial äußeren Bereich des Bunds 24 und damit ein die gerollte Buchse 22 öffnendes Moment verringert, wobei dennoch eine gleichmäßige durchgehende nach innen gewandte Bundfläche 34 und nach außen gewandte Bundfläche 36 beibehalten wird.

## Patentansprüche

1. Gerollte Gleitlagerbundbuchse (22) mit einer Stoßfuge, mit einem zylindrischen Teil mit einer Längsachse und an wenigstens einer Stirnseite mit einem nach radial außen flanschartig erstreckten Bund (24), **dadurch gekennzeichnet, dass** zur Reduzierung von in Umfangsrichtung des Bunds (24) wirkenden Zugspannungen am Außen- (28) und/oder Innenrand (32) des Bunds (24) in Umfangsrichtung durchgehend eine Fase (26, 30) geprägt ist.

2. Gleitlagerbundbuchse nach Anspruch 1, **dadurch gekennzeichnet, dass** sie aus einem Metall/Kunststoff-Verbundwerkstoff hergestellt ist.

3. Gleitlagerbundbuchse nach Anspruch 2, **dadurch gekennzeichnet, dass** die Kunststoffkomponente PTFE als Polymerbasis umfasst.

4. Gleitlagerbundbuchse nach Anspruch 2 oder 3, **dadurch gekennzeichnet, dass** die Kunststoffkomponente in eine poröse, insbesondere aufgesinterte Trägerschicht einimprägniert ist.

5. Verfahren zum Herstellen einer Gleitlagerbundbuchse nach Anspruch 1, in welchem eine Platine auf Buchsenform gerollt wird und danach ein Randabschnitt zur Bildung eines Bunds (24) umgelegt wird, **dadurch gekennzeichnet, dass** eine Fase (26, 30) am äußeren und/oder inneren Rand (28, 32) des Bunds (24) in Umfangsrichtung durchgehend gedrückt wird und dass dabei durch Gegenhalten von radial außen ein Fließen des Materials nach radial außen verhindert wird.

## Claims

1. Wrapped plain bearing shoulder bush (22) with a butt joint, having a cylindrical part with a longitudinal axis and having a shoulder (24) that extends radially outwards in a flange-like manner on at least one end face, **characterised in that** a bevelled edge (26, 30) is embossed continuously in the circumferential direction on the outer (28) and/or inner edge (32) of the shoulder (24) to reduce tensile stresses acting in the circumferential direction of the shoulder (24).

2. Plain bearing shoulder bush according to claim 1, **characterised in that** it is made of a metal/plastics composite material.

3. Plain bearing shoulder bush according to claim 2, **characterised in that** the plastics material component comprises PTFE as a polymer base.

4. Plain bearing shoulder bush according to either claim 2 or claim 3, **characterised in that** the plastics material component is impregnated in a porous, in particular sinter-fused, carrier layer.

5. Method for producing a plain bearing shoulder bush according to claim 1, wherein a printed circuit board is wrapped on a bush mould and subsequently an edge portion is doubled over to form a shoulder (24), **characterised in that** a bevelled edge (26, 30) is continuously pressed onto the outer and/or inner edge (28, 32) of the shoulder (24) in the circumferential direction and **in that** a flow of the material in a radially outward direction is prevented by opposing support coming from a radially outward direction.

## Revendications

1. Coussinet lisse enroulé à collet (22) avec un joint, comprenant une partie cylindrique d'axe longitudinal et, sur au moins une face frontale, un collet (24) s'étendant radialement vers l'extérieur à la manière d'une bride, **caractérisé en ce que** pour réduire les contraintes de tension dans la direction circonférentielles du collet (24) un chanfrein (26, 30) est réalisé par matriçage sur toute la périphérie du bord extérieur (28) et/ou du bord intérieur (32) du collet (24).

2. Coussinet lisse à collet selon la revendication 1, **caractérisé en ce qu'**il est fabriqué en matériau composite métalloplastique.

3. Coussinet lisse à collet selon la revendication 2, **caractérisé en ce que** la composante plastique est à base polymère PTFE.

4. Coussinet lisse à collet selon la revendication 2 ou 3, **caractérisé en ce que** la composante plastique imprègne une couche support poreuse, notamment agglomérée par frittage.

5. Procédé de fabrication d'un coussinet lisse à collet selon la revendication 1, dans lequel un flan est enroulé selon une forme de coussinet et une portion marginale est ensuite repliée pour former un collet (24), **caractérisé en ce qu'**un chanfrein (26, 30) est pratiqué par estampage en continu sur toute la périphérie du bord extérieur et/ou intérieur (28, 32) du collet (24), le matériau étant alors maintenu radialement depuis l'extérieur pour l'empêcher de fluer radialement vers l'extérieur.
